# EUROPEAN PATENT APPLICATION

(11) **EP 1 245 322 A1**
(43) Date of publication of application: **02.10.2002**
(21) Application number: 02251734.6
(22) Date of filing: 02.03.2002
(51) Int. Cl.: B23K 9/04

(54) **Method of forming a body by free form welding**

(30) Priority: 27.03.2001 GB 0107562
(71) Applicant: ROLLS-ROYCE plc, London, SW1E 6AT (GB)
(72) Inventor: Jones, Steven Alan, Derby DE65 5HN (GB); Wright, Iain William, Derby DE22 1DN (GB)
(74) Representative: Gunn, Michael Alan

(57) **Abstract**

A method for forming a body by deposition of a weld material comprises providing a welding head (12), and providing support means (34) to support the body. The welding head (12) and the support means (34) are connected to a supply of electricity to form an arc between the welding head (12) and the support means (34) to melt the weld material. The welding head (12) and the support means (34) are manipulated relative to each other to deposit the weld material and form a carrier member of the body. The carrier member is formed to carry a projecting member. The carrier member has a first portion (52) of a first predetermined thickness and a second portion (54) of a second predetermined thickness, the second predetermined thickness being greater than the first predetermined thickness. A projecting member is provided on the first portion. The projecting may be formed by manipulating the support means (34) and the welding head (12) relative to each other to deposit the weld material on the second portion (54) of the carrier member and form the projecting member.

## Description

This invention relates to apparatus and methods for forming bodies. More particularly, the invention concerns apparatus and methods for forming bodies by deposition of a weld material.

The formation of components for aerospace engines can be carried out by any of several techniques of deposition of a weld material. These techniques involve the striking of an arc between two electrodes, the first electrode being held in a welding head to which is fed a supply of a weld material, the supply being in the form of a wire of the material wound upon a reel. The second electrode is in the form of a foundation or substrate upon which the weld material is to be deposited to form the component. The foundation may be in the form of a metal plate. A supply of an inert gas is fed to the welding head during its operation.

When the welding head and the foundation are connected to a supply of electricity, an arc is formed in the inert gas which melts the metal wire and the foundation. The metal is then deposited onto the foundation in a controlled manner. The welding head is mounted on a robotic arm and the plate is mounted on a movable turntable. By controlling the movement of the arm and the turntable, the metal can be deposited on the plate in order to form components of any desired shape.

One such method of forming components involves providing the welding head with a permanent electrode and also providing a separate metal wire to the welding head. This method is generally known in the art as tungsten inert gas welding which is generally shortened to TIG welding. The use of the word tungsten is intended as a synecdoche, and it will be appreciated by those skilled in the art that other suitable materials could be used as the first electrode.

Another such method involves the use of a sacrificial electrode in the welding head. With this arrangement, the metal wire which provides the weld material also constitutes the electrode and is fed through the welding head. This method is generally known in the art as metal inert gas welding, which is generally shortened to MIG welding.

In cases where the body is cylindrical, for example in the form of a casing, it is often necessary to provide a non- axisymmetrical feature on it. This feature may be, for example a boss or a flange. Problems can arise when such features are formed due to localised stress build-up which can result in distortion of the body.

According to one aspect of this invention, there is provided a method of forming a body by deposition of a weld material, the method comprising providing a welding head, providing support means to support the body, supplying a weld material to the welding head, connecting the welding head and the support means to a supply of electricity to form an arc between the welding head and the support means or the body to melt the weld material, and manipulating the support means and the welding head relative to each other to deposit the weld material and form a carrier member having a first portion of a first predetermined thickness and a second portion of a second predetermined thickness, the second predetermined thickness being greater than the first predetermined thickness, and providing a projecting member on the second portion.

The step of providing the projecting member on the second portion preferably includes raising the temperature of at least said second portion.

According to another aspect of this invention there is provided a method of forming a body by deposition of a weld material, the method comprising providing a welding head, providing support means to support the body, supplying a weld material to the welding head, connecting the welding head and the support means to a supply of electricity to form on arc between the welding head and the support means or the body to melt the weld material, and manipulating the support means and the welding head relative to each other to deposit the weld material and form a carrier member, and providing a projecting member on the carrier member, wherein before the projecting member is provided on the carrier member, the method includes effecting one or both of the steps of (a) forming a first portion of the carrier member with a first predetermined thickness, forming a second portion of the carrier member with a second predetermined thickness the second predetermined thickness being greater than the first predetermined thickness, and providing the projecting member on the second portion, and (b) providing the projecting member on a region of the carrier member and raising the temperature of at least said region when the projecting member is provided thereon.

Preferably, the projecting member is provided on the carrier member by being formed thereon, advantageously by manipulating the support means and the welding head relative to each other to deposit the weld material on the carrier member and form the projecting member. The formation of the projecting member is preferably effected after formation of the carrier member, or may be effected during formation of the carrier member.

The projecting member may comprise a flange, or boss, or other non-axisymmetrical feature deposited on the body. The body may be axisymmetrical, for example a casing for part of a gas turbine engine.

The carrier member preferably comprises a wall.

A linear dimension of the second portion in at least one, and preferably any, orientation transverse to the thickness of the second portion may be at least about four times the linear dimension of the projecting member in the same orientation.

Where the largest of said linear dimensions of the projecting member, for example the diameter, is less than substantially 50 mm, at least the corresponding linear dimension of the second portion is preferably at least six times the aforesaid largest linear dimension of the projecting member. Preferably, substantially all the linear dimensions of the second portion are at least six times the largest linear dimension of the projecting member.

Where the largest linear dimension of the projecting member is greater than substantially 50 mm, at least the corresponding linear dimensions of the second portion is at least four times the aforesaid largest linear dimension of the projecting member.

Preferably substantially all the linear dimensions of the second portion are at least four times the largest linear dimension of the projecting member.

The thickness of the second portion is preferably at least substantially 5 mm, for example, where the welding process is a MIG welding process. The thickness of the second portion is preferably at least substantially 10 mm, where the welding process is a TIG welding process.

Preferably, the step of manipulating the support means and the welding head relative to each other to form the carrier member involves providing a predetermined value, or range of values, of electric current, relative speed of the support and the welding head, and speed of supply of the weld material, thereby forming at least some of the first portion, and varying one or more of said electric current, relative speed of the support means and the welding head, and speed of supply of the weld material, thereby forming said at least some of said second portion.

The step of manipulating the support means as aforesaid may further include, further varying one or more of said values, or range of values of electric current, relative speed of the support and the welding head, and speed of supply of the weld material to form a further part of the first portion.

Preferably, the second portion of the carrier member tapers outwardly from the first portion at edge regions of the second portion. The tapering of the edge regions of the second portion may be formed by a gradual, or stepped, variation of one or more of said electric current said relative speed of the support means and the welding head, and said speed of supply of the weld material.

According to another aspect of this invention there is provided a body comprising a carrier member having a first portion of a first predetermined thickness and a second portion of a second predetermined thickness, the second predetermined thickness being greater than the first predetermined thickness, and a projecting member on the second portion.

Preferably, the carrier member comprises a wall. The body is preferably axisymmetrical, and may be generally cylindrical. In one embodiment, the body is a casing for part of a gas turbine engine.

The projecting member may comprise a flange, or boss, or other non-axisymmetrical feature of the body.

A linear dimension of the second portion in at least one, and preferably any, orientation transverse to the thickness of the second portion may be at least about four times the linear dimension of the projecting member in the same orientation.

Where the largest of said linear dimensions of the projecting member, for example the diameter, is less than substantially 50 mm, at least the corresponding linear dimension of the second portion is preferably at least six times the aforesaid largest linear dimension of the projecting member. Preferably, substantially all the linear dimensions of the second portion are at least six times the largest linear dimension of the projecting member.

Where the largest linear dimension of the projecting member is greater than substantially 50 mm, at least the corresponding linear dimensions of the second portion is at least four times the aforesaid largest linear dimension of the projecting member. Preferably substantially all the linear dimensions of the second portion are at least four times the largest linear dimension of the projecting member.

The second portion of the carrier member preferably tapers outwardly from the first portion at edge regions of the second portion.

Preferably, at least the carrier member is formed of a weld material, by deposition of the weld material on support means. The projecting member may be formed of a weld material by deposition of the weld material on said second portion of the carrier member.

An embodiment of the invention will now be described by way of example only, with reference to the accompanying drawings, in which:
Fig. 1 is a diagrammatic side view of apparatus forming a body; and
Fig. 2 is a close up cross sectional view of a carrier member having a projecting member provided thereon.

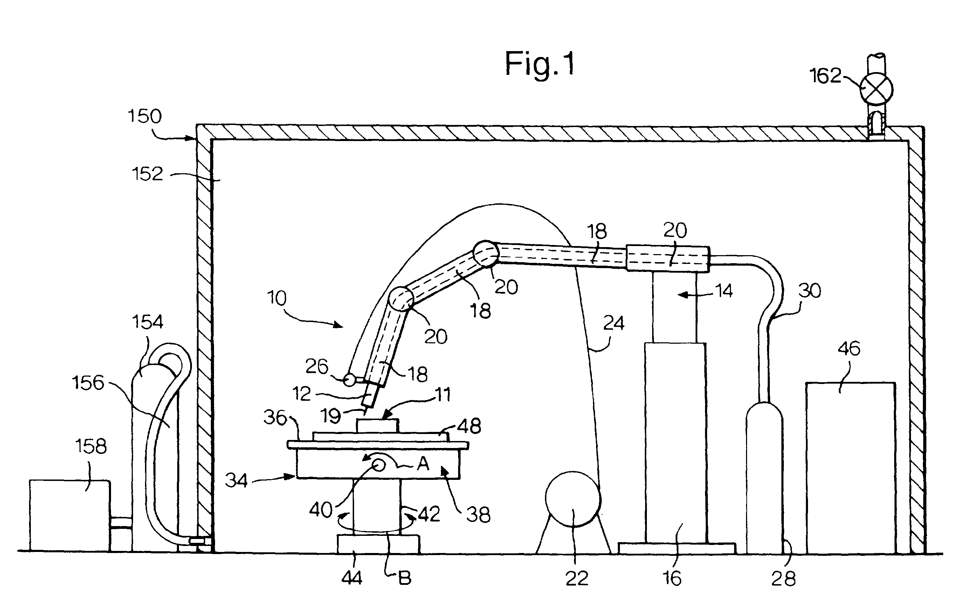

Referring to Fig. 1, there is shown apparatus 10 for forming a body 11 by deposition of a weld material. The apparatus 10 comprises an arc welding head 12, mounted on the free end of a support mechanism comprising a robot 14 in the form of an arm. The robot arm 14 comprises a base member 16 on which is pivotally mounted a plurality of sections 18 which are movable about a plurality of hinges 20 so that the welding head 12 can be manipulated to any desired position. The welding head 12 includes a first electrode 19.

A supply 22 of a metal wire 24 is provided, in the form of a reel around which the wire 24 is wound. The metal is in the form of a titanium alloy, for example titanium 6/4 which includes 6% aluminium and 4% vanadium. The wire 24 is fed from the reel 22 to the welding head 12 such that the end of the wire 24 is arranged just below the tip of the welding head 12. The wire 24 is held in place by suitable holding means 26.

The apparatus 10 also includes a supply of an inert gas, in the form of a cylinder 28, having a pipe 30 leading from the cylinder 28 to the welding head 12, and which extends adjacent to the robot arm 14. The gas is any suitable inert gas or gases, or combination of inert and active gases, for example argon or argon/carbon dioxide, and provides the medium in which an arc is formed, as will be explained below.

Support means 34 is provided beneath the welding head 12 and comprises a turntable 36 mounted upon a platform 38. The platform 38 is pivotally mounted, as indicated by the arrow A, by pivot 40 to a pedestal 42 which, in turn, is rotatably mounted, as indicated by the arrow B, upon a base member 44.

A support arrangement 48 (shown schematically in Fig. 1) is mounted onto the turntable 36. The support arrangement 48 supports the body formed from the deposition of the weld material thereon. The support arrangement 48, and the body formed thereon, constitutes the second electrode.

Control means in the form of a computer 46 controls the movement of the support means 34 and the robot arm 14, as well as controlling the supply of argon, and the supply 22 of the metal wire 24.

An enclosure 150 defining a chamber 152 surrounds the robot arm 14 and the support means 34, thereby also surrounding the support arrangement 48 and the body formed thereon. In the embodiment shown, the cylinder 28 of the inert gas and the computer 46 are contained within the enclosure 150. The enclosure 150 can be formed by a suitable rigid material, for example aluminium or a plastics material. The enclosure may also comprise windows to view the body being formed therein and at a door to allow access inside the enclosure 150.

A second supply of an inert gas in the form of a second cylinder 154 is provided to supply the inert gas, for example argon, to the chamber 152 via a pipe 156 so that the atmosphere within the chamber 152 is substantially devoid of oxygen, or at least having less than 40ppm oxygen therein, and is substantially devoid of nitrogen, or at least having less than 140 ppm nitrogen therein. In the embodiment shown in Fig. 1, the argon is fed to the chamber 152 just above the floor 160.

The argon is supplied at a rate of 300-400 litres/min. This rate of supply of argon is required to create turbulence and thereby dislodge any trapped pockets of air in the chamber 150.

The air, and the argon fed to the chamber 152 are evacuated therefrom via one or more valves 162 arranged on the top of the enclosure.

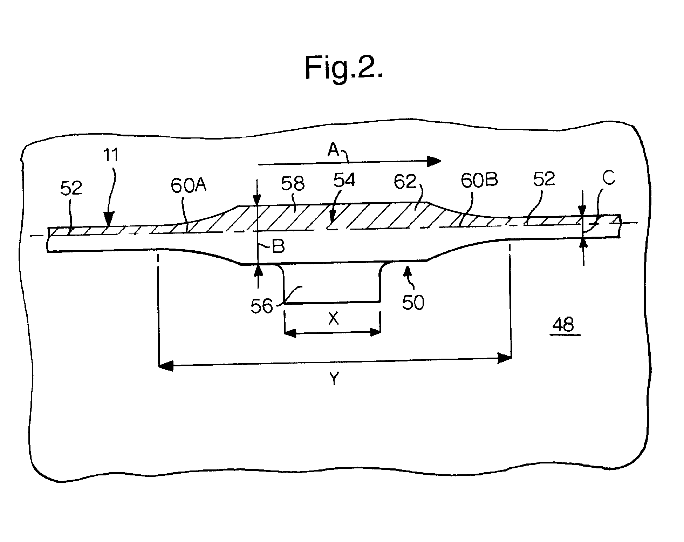

Referring to Fig. 2, there is shown a cross sectional schematic view of part of the body 11 formed on the support arrangement 48. The body 11 comprises a carrier member in the form of a wall 50 formed by a process of deposition of a weld material using the welding apparatus 10. Only part of the wall 50 is shown in Fig. 2. The wall 50 comprises a first portion 52 surrounding a second portion 54. As can be seen from Fig. 2, the second portion 54 is thicker than the first portion 52.

A projecting member in the form of a boss 56 is provided on the second portion 54 of the wall 50. The boss 56 is also formed by the deposition of the welding material using the same process used for forming the wall 50.

The body 11 may be a cylindrical body, for example to be used as a casing for a component of a gas turbine engine. The boss 56 may be provided to attach to the body 11 various other components of the gas turbine engine. The second portion 54 comprises a main part 58 and tapers 60A, 60B at the edge regions of the main part 58. The tapers 60A, 60B preferably extend substantially wholly around the main part 58.

The formation of the wall 50 is carried out by the deposition of a weld material by the relative movement of the support arrangement 48 and the welding head 12 (not shown in Fig. 2) in a controlled manner.

When the region of the wall 50 shown in Fig. 2 is formed, the welding head 12 is travelling relative to the support arrangement 48 in the direction of the arrow A. As the welding head 12 reaches the point where the taper 60A is to be formed, the amount of weld material deposited is increased in a stepwise, or gradual, manner until a first layer of the taper 60A is formed. This increase in the amount of weld material being deposited is effected by varying one or more of the following parameters from the setting required for the formation of each layer of the first portion 52 of the wall 50. The parameters in question are the electric current, the relative travel speed between the welding head 12 and the support arrangement 48, and the speed of the wire supplied to the welding head.

When the welding head 12 reaches the end of the taper 60A, the parameters at that point are maintained to form a first layer of the main part 58 of the second portion 54 until the welding head 12 reaches the opposite edge of the main part 58 to begin forming the taper 60B at the right hand side of the main part 58, as shown in Fig. 2. The above parameters are then varied in a stepwise, or gradual, manner to decrease the amount of weld material deposited, until the taper 60B has been formed. When each layer of the taper 60B is formed, the parameters have returned to the settings required for forming the first portion 52. These parameters are then maintained to continue the deposition of the weld material to form the first portion 52 to the right of the second portion 54 as shown in Fig. 2. This is then repeated each time the welding head passes the region shown in Fig. 2 so that the first portion 52 and the second portion 54 are built up layer by layer.

As can be seen, the thickness of the second portion 54, as indicated by the double headed arrow B, is greater than the thickness of the first portion 52, as indicated by the double headed arrow C. Thus, the second portion 54 is more able than the first portion 52 to bear the forces thereon when the molten weld material is deposited thereon to form the boss 56.

The boss 56 is formed after the wall 50 has been formed, and is formed by the deposition of weld material in a known manner centrally on the second portion 54.

In the embodiment shown, the boss 56 is in the form of a cylinder having a diameter x, where x is less than substantially 50 mm. The diameter of the second portion 54, is preferably at least six times the diameter of the boss 56. Where the diameter of the boss 56 is greater than substantially 50 mm, the diameter of the second portion is preferably at least four times the diameter of the boss 56.

In general, the second portion 54 is in the shape of a circle surrounding the boss 56. Where the boss 56 does not have a circular profile in plan, the diameter of the second portion 54 is calculated on the basis of the largest dimension of the boss 56. For example, where the boss 56 is an elongate formation having a length L, the diameter of the second portion should preferably be at least four times the length L, if L is greater than substantially 50 mm, or at least six times the length L, if L is less than substantially 50 mm.

The minimum thickness of the second portion 54 should, in the case of a TIG welding process is about 10 mm. In the case of a MIG welding process, the minimum thickness of the second portion is about 5 mm.

After the body has been formed, it is then subjected to a heat treating process to relieve any stresses in it. The heat treating process is dependent upon the chemistry of the weld material. Typically, the body may undergo heating to a temperature of between 0.4 Tm to 0.6 Tm, where Tm is the melting temperature of the material.

After the body 11 has been formed, the first portion 52, and the second portion 54 of the wall 50 may be machined, if desired. In such a case, a region designated 62 and shaded in Fig. 2 may be removed by machining.

Various modifications can be made without departing from the scope of the invention. For example, the above embodiment has been described using a TIG welding process, but a MIG welding process could be used. In addition, when the boss 56 is formed on the second portion 52, the temperature of the second portion 52 can be raised to reduce the rate of cooling of the boss 56 during its formation. This can also have a beneficial effect by reducing stresses induced in the second portion which would also reduce the tendency of the body 11 to deform. Also, alternative robots and welding materials can be used. The boss 56 shown in the above embodiment is generally cylindrical in configuration. It could of course be any other suitable shape for example toroidal.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A method of forming a body by deposition of a weld material, the method comprising providing a welding head 12, providing support means 34 to support the body, supplying a weld material to the welding head, connecting the welding head 12 and the support means 34 to a supply of electricity to form an arc between the welding head 12 and the support means 34 or the body to melt the weld material, **characterised in that** the support means 34 and the welding head 12 are manipulated relative to each other to deposit the weld material and form a carrier member of the body, the carrier member having a first portion 52 of a first predetermined thickness and a second portion 54of a second predetermined thickness, the second predetermined thickness being greater than the first predetermined thickness, and providing a projecting member 56 on the second portion 54.

2. A method according to claim 1 **characterised in that** the projecting member 56 is provided on the carrier member by being formed thereon by manipulating the support means 34 and the welding head 12 relative to each other to deposit the weld material on the second portion 54 of the carrier member and form the projecting member 56.

3. A method according to claim 2 **characterised in that** the formation of the projecting member 56 is effected after formation of the second portion 54 of the carrier member.

4. A method according to claim 2 **characterised in that** the formation of the projecting member 56 is effected during formation of the second portion 54 of the carrier member.

5. A method according to any of claims 1 to 4 **characterised in that** the carrier member comprises a wall 50.

6. A method according to any preceding claim **characterised in that** a linear dimension of the second portion 54 in at least one orientation transverse to the thickness of the second portion 54 is greater than, or substantially equal to, about four times the linear dimension of the projecting member 56 in the same orientation.

7. A method according to any preceding claim **characterised in that** the step of manipulating the support means 34 and the welding head 12 relative to each other to form the carrier member involves providing predetermined values, or range of values, of electric current, relative speed of the support and the welding head 12, and speed of supply of the weld material, thereby forming at least some of the first portion 52, and varying one or more of said electric current input, relative speed of the support means 34 and the welding head 12, and speed of supply of the weld material, thereby forming at least some of said second portion 54.

8. A method according to claim 7 **characterised in that** it includes further varying one or more of said predetermined values, or range of values, of electric current, relative speed of the support 34 and the welding head 12, and the speed of supply of the weld material, thereby forming a further part of the first portion 52.

9. A method according to any preceding claim **characterised in that** the second portion 54 of the carrier member tapers outwardly from the first portion 52 at edge regions of the second portion 54.

10. A method according to claim 9 when dependent upon claim 7 or 8 **characterised in that** the tapering of the edge regions of the second portion 54 is formed by a gradual, or stepped, variation of one or more of said electric current input, relative speed of the support means 34 and the welding head 12, and the speed of supply of the weld material.

11. A method according to any preceding claim **characterised in that** it includes raising the temperature of at least the second portion 54 when the projecting member 56 is being provided thereon.
